# EUROPEAN PATENT SPECIFICATION

(11) **EP 3 974 303 B1**
(45) Date of publication and mention of the grant of the patent: **25.03.2026**
(21) Application number: 21193216.5
(22) Date of filing: 26.08.2021
(51) Int. Cl.: B62J 37/00, F02M 25/08

(54) **STRADDLED VEHICLE**
GRÄTSCHSITZFAHRZEUG
VÉHICULE À ENFOURCHER

(30) Priority: 25.09.2020 JP 2020161188
(43) Date of publication of application: 30.03.2022
(73) Proprietor: Yamaha Hatsudoki Kabushiki Kaisha, Iwata-shi, Shizuoka 438-8501 (JP)
(72) Inventor: TANAKA, Tomoki, Iwata-shi, 4388501 (JP)
(74) Representative: Studio Torta S.p.A.

(56) References cited:
- EP-A1- 2 597 020
- EP-A1- 3 450 291
- DE-A1- 102017 219 422
- US-A1- 2011 308 874
- US-A1- 2020 140 030

## Description

### BACKGROUND

### Field of the Invention

The present invention relates to a straddled vehicle.

### Background Information

A straddled vehicle disclosed in Japan Laid-open Patent Application Publication No. 2012-1119 includes a canister and a purge valve. The canister and the purge valve are attached to the rear side of a cylinder of an engine through a fixing bracket. The fixing bracket is fixed to the cylinder through an anti-vibration bushing for absorbing vibrations transmitted from the engine to the canister.

### SUMMARY

In the well-known straddled vehicle, the canister is fixed to the cylinder through the fixing bracket. Hence, the well-known straddled vehicle requires a space for disposing the fixing bracket and a member for attaching the fixing bracket. Because of this, degradation in efficiency of space usage, increase in manufacturing cost, and further, increase in vehicle weight are posed as problems. Besides, when the anti-vibration bushing is provided, increase in manufacturing cost is also posed as a problem.
US-A-2011/308874 discloses a straddled vehicle according to the preamble of claim 1.

It is an object of the present invention to inhibit degradation in efficiency of space usage, increase in manufacturing cost, and increase in vehicle weight in a straddled vehicle including a canister and a purge valve.

A straddled vehicle according to an aspect of the present invention includes a vehicle body frame, an engine, a canister, a purge valve, and a holder. The vehicle body frame includes a head pipe. The engine includes a throttle body. The engine is supported by the vehicle body frame. The canister includes a flat surface portion slanting with respect to a horizontal direction in a vehicle side view. The purge valve is connected to the canister and the throttle body. The holder is made of an elastic material and collectively holds the canister and the purge valve. The holder includes a fitting portion to which the flat surface portion of the canister is fitted and a valve holding portion provided to protrude from the fitting portion.

In the straddled vehicle according to the present aspect, the canister and the purge valve are collectively held by the holder made of the elastic material. Hence, degradation in efficiency of space usage, increase in manufacturing cost, and increase in vehicle weight can be inhibited in the straddled vehicle including the canister and the purge valve. Besides, vibrations, transmitted from the engine to the canister and the purge valve, can be inhibited by the holder. Furthermore, the valve holding portion is provided to protrude from the fitting portion to which the flat surface portion of the canister is fitted. Hence, the purge valve can be held in an adjacent position to the canister. For example, this makes it possible to shorten a hose that connects the purge valve and the canister. Accordingly, an efficient layout is enabled for the hose, and simultaneously, increase in manufacturing cost can be inhibited.

The valve holding portion may be made in shape of a hole penetrating the holder in a vehicle width direction. The purge valve may be inserted into the valve holding portion along the vehicle width direction and may be held by the valve holding portion. In this case, the purge valve can be held with a simple configuration.

The straddled vehicle is defined according to the invention to further include a starter motor. The holder also includes a motor holding portion holding the starter motor. In this case, degradation in efficiency of space usage, increase in manufacturing cost, and increase in vehicle weight can be inhibited.

The straddled vehicle may further include a fuel tank disposed behind the head pipe. The holder may include a guide portion guiding a hose connected to the fuel tank. In this case, the hose can be guided by the holder.

The purge valve may be disposed directly above the canister. In this case, the canister and the fuel tank are disposed at close distance. This makes it possible to shorten a hose that connects the canister and the fuel tank.

### BRIEF DESCRIPTION OF THE DRAWINGS

FIG. 1 is a left side view of a straddled vehicle.
FIG. 2 is a left side view of an engine and the surroundings thereof.
FIG. 3 is a top view of the engine and the surroundings thereof.
FIG. 4 is a view of the engine and the surroundings thereof seen from behind the straddled vehicle.
FIG. 5 is an enlarged view of portion of FIG. 2.
FIG. 6 is a left side view of a canister, a purge valve, a starter motor, and a holder.
FIG. 7 is a top view of the canister, the purge valve, and the holder.
FIG. 8 is a perspective view of a crankcase, the stater motor, and the holder seen from the right rear of the straddled vehicle.
FIG. 9 is a perspective view of the holder.

### DETAILED DESCRIPTION OF EMBODIMENTS

A preferred embodiment of a straddled vehicle according to an aspect of the present invention will be hereinafter explained with reference to drawings. It should be noted that in the following explanation, terms indicating such directions as "back and forth", "up and down" and "right and left" are explained based on directions seen from a rider in operation of a straddled vehicle 100.

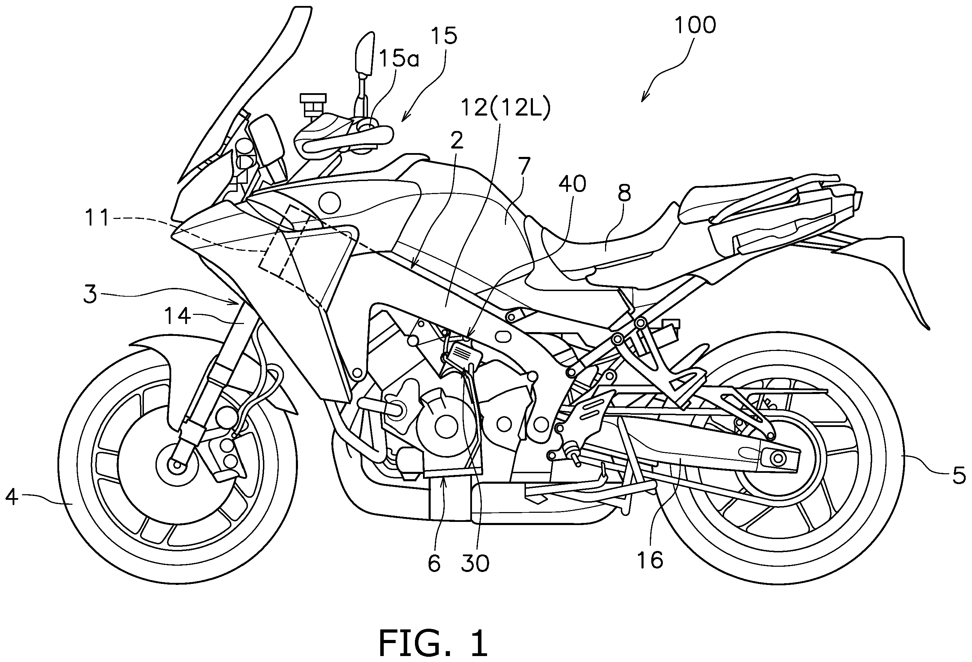

FIG. 1 is a left side view of the straddled vehicle 100. The straddled vehicle 100 includes a vehicle body frame 2, a steering device 3, a front wheel 4, a rear wheel 5, an engine 6, a fuel tank 7, and a seat 8.

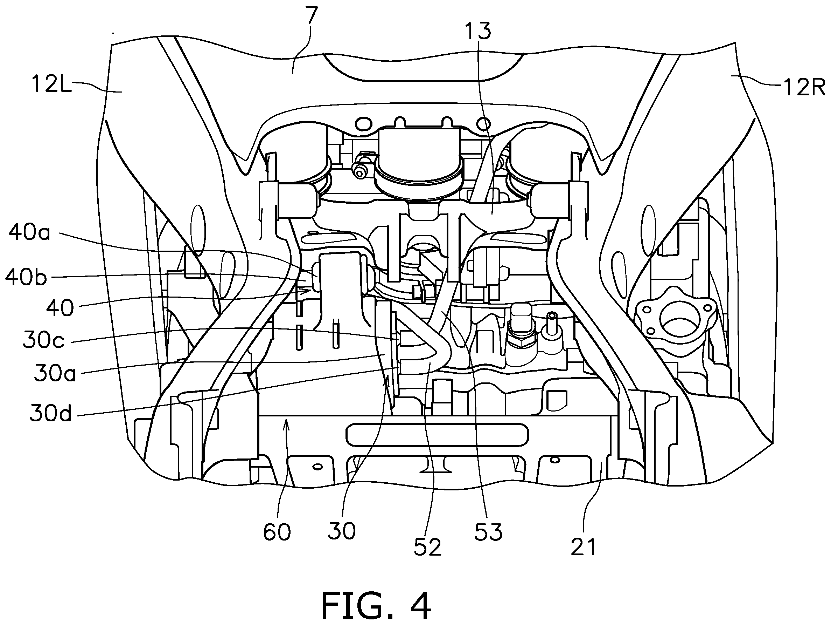

The vehicle body frame 2 includes a head pipe 11, a main frame 12, and a cross frame 13 (see FIG. 4). The head pipe 11 extends forward and downward. The head pipe 11 is disposed in the center of the straddled vehicle 100 in a vehicle width direction.

The main frame 12 is connected at the front end thereof to the head pipe 11. The main frame 12 is composed of components provided right and left. The main frame 12 extends rearward from the head pipe 11, while branching therefrom right and left into the components. It should be noted that the term "connection" is not limited to direct connection and encompasses indirect connection. Besides, the term "connection" is not limited to a condition that separate members are fixed to each other and encompasses a condition that a plurality of portions in an integrated member continue to each other.

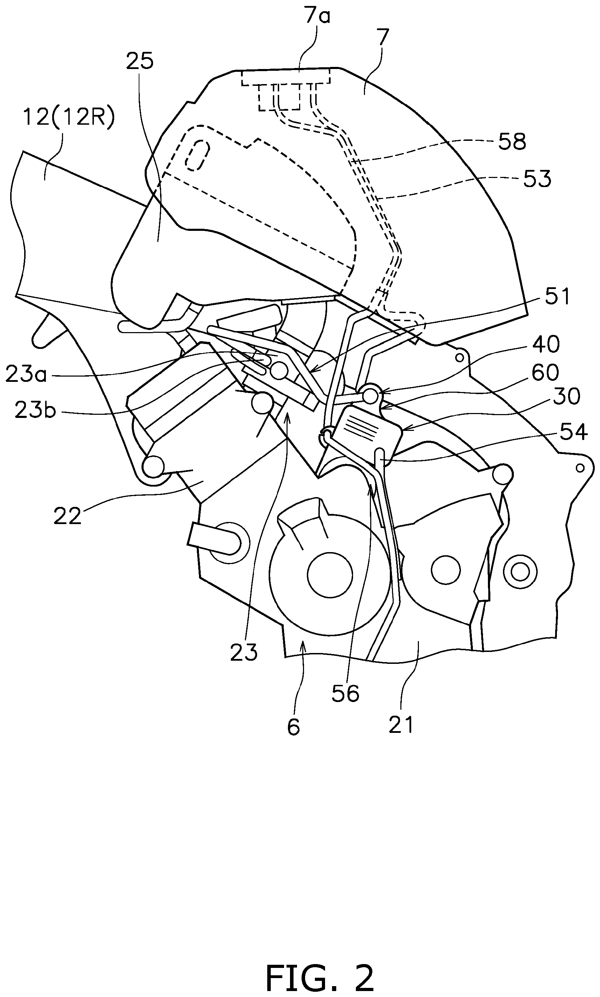

The main frame 12 includes a left main frame 12L and a right main frame 12R (see FIG. 2). The left main frame 12L is disposed on the left side of the center of the straddled vehicle 100 in the vehicle width direction. The right main frame 12R is disposed on the right side of the center of the straddled vehicle 100 in the vehicle width direction. The cross frame 13 extends in the vehicle width direction and connects the left main frame 12L and the right main frame 12R to each other. The cross frame 13 overlaps the engine 6 in a vehicle plan view.

The steering device 3 is supported by the head pipe 11 so as to be turnable. The steering device 3 includes a front fork 14 and a handle portion 15. The front fork 14 extends forward and downward. The front fork 14 is connected at the lower end thereof to the front wheel 4. The handle portion 15 is connected to the front fork 14. The handle portion 15 includes a handlebar 15a extending in the right-and-left direction. The handlebar 15a is provided with grips on both ends thereof.

The front wheel 4 is supported by the front fork 14 so as to be rotatable. The rear wheel 5 is supported by a swing arm 16 disposed behind the engine 6 so as to be rotatable.

The engine 6 is supported by the vehicle body frame 2. The engine 6 is disposed directly below the main frame 12.

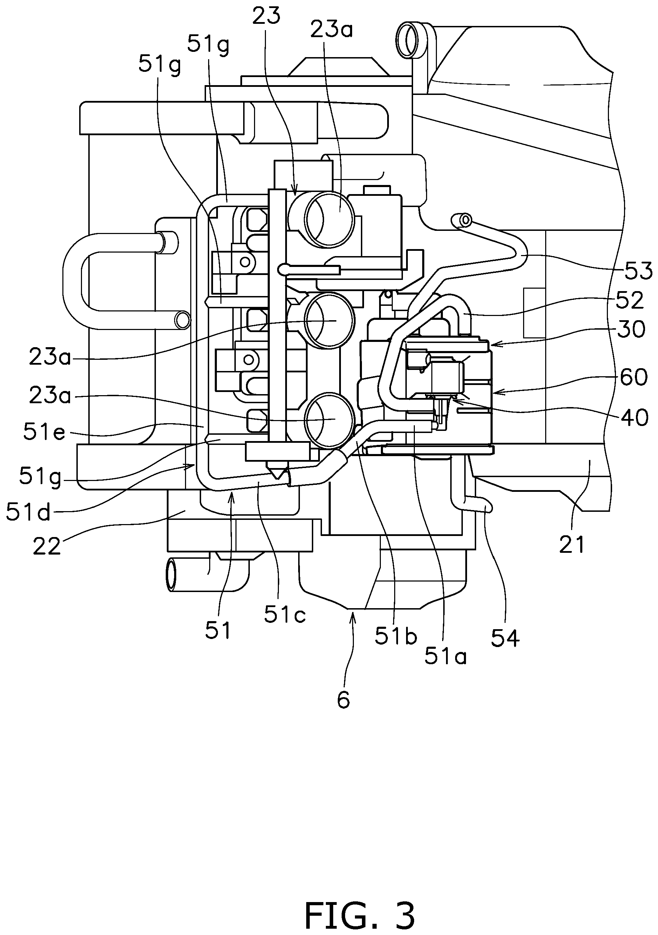

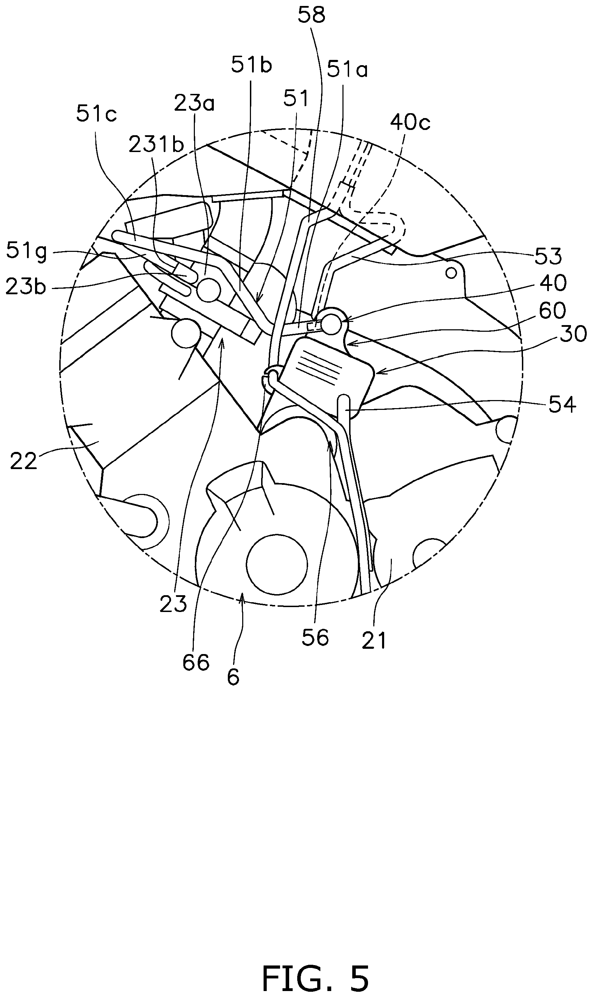

FIG. 2 is a left side view of the engine 6 and the surroundings thereof. FIG. 3 is a top view of the engine 6 and the surroundings thereof. FIG. 4 is a view of the engine 6 and the surroundings thereof seen from behind the vehicle. FIG. 5 is an enlarged view of portion of FIG. 2. The engine 6 includes a crankcase 21, a cylinder 22, and a throttle body 23.

The cylinder 22 extends forward and upward from a front portion of the crankcase 21. The throttle body 23 is connected to the cylinder 22. The throttle body 23 is disposed directly below the fuel tank 7. The throttle body 23 regulates the amount of air taken into the engine 6. An air cleaner 25 is connected to the throttle body 23. The air cleaner 25 is disposed directly above the cylinder 22.

The throttle body 23 includes a plurality of throttles 23a and a plurality of connection ports 23b provided to the plural throttles 23a on a one-to-one basis. The plural throttles 23a are disposed away from each other at intervals in the right-and-left direction. The plural throttles 23a each have a cylindrical shape and extend rearward and upward from the cylinder 22. The plural throttles 23a are each provided with a throttle valve (not shown in the drawings) disposed in the interior thereof. It should be noted that the throttle body 23 may employ a configuration including only one throttle 23a. A first hose 51 (to be described) is connected to each connection port 23b. Each connection port 23b is disposed on a more front side than each throttle 23a. Each connection port 23b extends forward and upward from the outer peripheral portion of each throttle 23a toward the head pipe 11. As shown in FIG. 5, a front end 231b of each connection port 23b is located on a more front side than each throttle 23a.

The fuel tank 7 is disposed behind the head pipe 11. The fuel tank 7 is disposed directly above the engine 6 and the main frame 12. The seat 8 is disposed behind the fuel tank 7. The seat 8 extends in the back-and-forth direction.

As shown in FIGS. 2 to 5, the straddled vehicle 100 includes a canister 30, a purge valve 40, first to fourth hoses 51 to 54, a starter motor 56, and a holder 60.

The canister 30 is held by the holder 60. The canister 30 is disposed on a more rear side than the throttle body 23, while being disposed directly below the fuel tank 7. In the present preferred embodiment, the canister 30 is disposed behind the throttle body 23. In the vehicle side view, the canister 30 overlaps the cylinder 22 in the back-and-forth direction. The canister 30 is disposed directly above the crankcase 21. As shown in FIG. 3, the canister 30 does not overlap the throttle body 23 in the vehicle plan view.

As shown in FIGS. 2 and 4, the canister 30 is disposed inside the vehicle body frame 2. The canister 30 is disposed directly below the main frame 12. The canister 30 does not overlap the main frame 12 in the vehicle side view. As seen from behind the vehicle, the canister 30 is disposed between the left main frame 12L and the right main frame 12R.

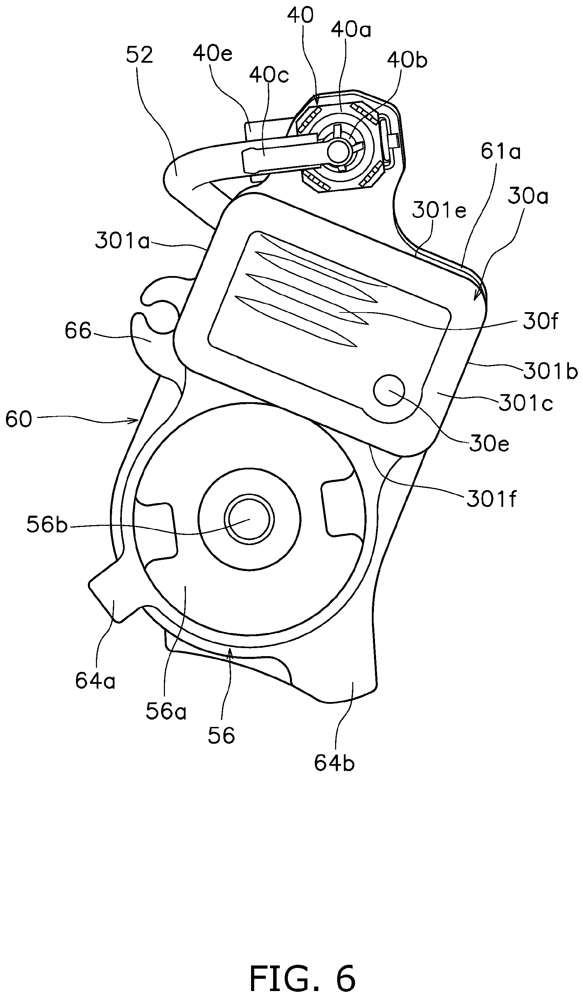

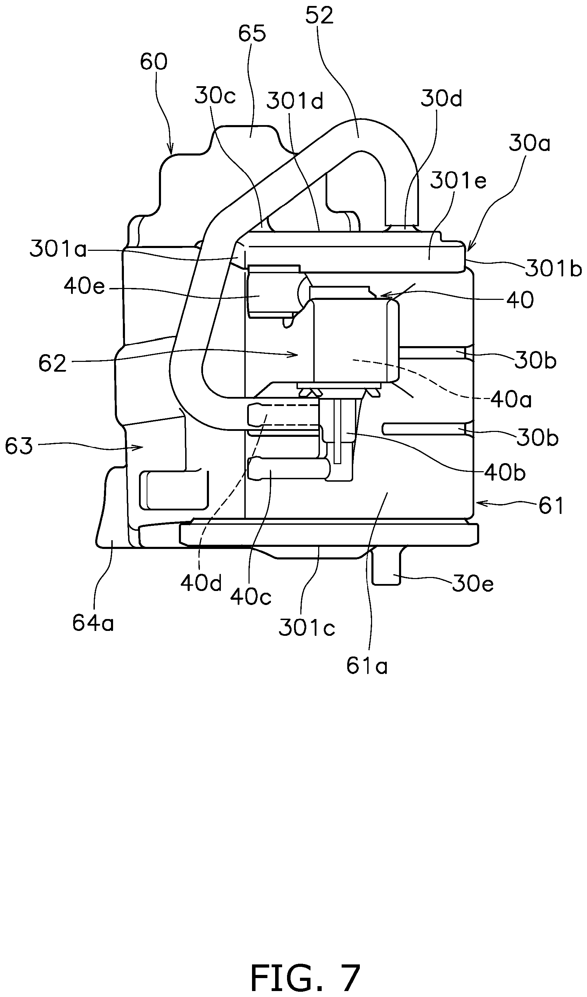

FIG. 6 is a left side view of the canister 30, the purge valve 40, the starter motor 56, and the holder 60. FIG. 7 is a top view of the canister 30, the purge valve 40, and the holder 60. The canister 30 includes a body 30a, a plurality of ribs 30b, first to third connection ports 30c to 30e, and a plurality of cooling fins 30f.

The body 30a has an approximately cubic shape and slants with respect to a horizontal direction in the vehicle side view. The body 30a slants such that a front portion thereof is located on an upper side than a rear portion thereof. When described in detail, the body 30a includes a front surface portion 301a, a rear surface portion 301b, a left surface portion 301c, a right surface portion 301d, an upper surface portion 301e, and a lower surface portion 301f. The front and rear surface portions 301a and 301b, the left and right surface portions 301c and 301d, and the upper and lower surface portions 301e and 301f are pairs of outer surface portions of the body 30a and are located in the back-and-forth direction, the right-and-left direction, and the up-and-down direction, respectively. The surface portions 301a to 301f are each made in shape of a plane slanting with respect to the horizontal direction in the vehicle side view. The upper surface portion 301e is an exemplary flat surface portion.

The front end of the upper surface portion 301e is located on an upper side than the rear end thereof. The front end of the lower surface portion 301f is located on an upper side than the rear end thereof. The front surface portion 301a extends upward and rearward from the front end of the lower surface portion 301f. The rear surface portion 301b extends upward and rearward from the rear end of the lower surface portion 301f. The body 30a is greater in dimension in both the right-and-left direction and the back-and-forth direction than in the up-and-down direction. The body 30a is greater in dimension in the right-and-left direction than in the back-and-forth direction. The left surface portion 301c is shaped to have a greater diameter than the right surface portion 301d. The plural ribs 30b are composed of two or more ribs 30b provided on the upper surface portion 301e of the body 30a and two or more ribs 30b provided on the lower surface portion 301f of the body 30a. The plural ribs 30b each extend in the back-and-forth direction.

As shown in FIG. 7, the first and second connection ports 30c and 30d protrude from the right surface portion 301d of the body 30a in the vehicle width direction. The first connection port 30c is a port that the third hose 53 extending from the fuel tank 7 is connected. The second connection port 30d is disposed behind the first connection port 30c. The second connection port 30d is connected to the purge valve 40 through the second hose 52. The third connection port 30e protrudes from the left surface portion 301c of the body 30a in the vehicle width direction. The third connection port 30e is a port that the fourth hose 54 is connected for discharging air in the canister 30.

The plural cooling fins 30f protrude from the left surface portion 301c of the body 30a in the vehicle width direction, while extending in the back-and-forth direction. The plural cooling fins 30f downwardly slant from front to rear. The plural cooling fins 30f are disposed away from each other at intervals in the up-and-down direction.

The purge valve 40 is connected to both the canister 30 and the throttle body 23. The purge valve 40 is disposed in an intake pathway that connects the canister 30 and the throttle body 23 to each other. The purge valve 40 regulates the flow rate of volatilized gasoline to be supplied to the throttle body 23 from the canister 30. The purge valve 40 is controlled by an engine control unit (not shown in the drawings).

The purge valve 40 is held by the holder 60. The purge valve 40 is disposed directly above the canister 30. The purge valve 40 entirely overlaps the canister 30 in the vehicle plan view. In more detail, the purge valve 40 entirely overlaps the upper surface portion 301e of the body 30a of the canister 30 in the vehicle plan view. As shown in FIG. 5, the purge valve 40 is disposed on a more rear side than the throttle body 23. The purge valve 40 overlaps the throttle body 23 in the vehicle back-and-forth direction in the vehicle side view. The purge valve 40 is disposed inside the vehicle body frame 2. The purge valve 40 overlaps the vehicle body frame 2 in the vehicle side view. When described in detail, a portion of the purge valve 40 overlaps the main frame 12 in the vehicle side view. The purge valve 40 overlaps the cross frame 13 in the vehicle plan view. It should be noted that the purge valve 40 may entirely overlap the main frame 12 in the vehicle side view, or alternatively, may not overlap the main frame 12 in the vehicle side view.

The purge valve 40 includes a body 40a, a coupling portion 40b, a first connection port 40c, a second connection port 40d, and a third connection port 40e. The body 40a is greater in dimension in the right-and-left direction than in both the back-and-forth direction and the up-and-down direction. The body 40a is held by the holder 60 while in contact therewith. As shown in FIG. 7, the body 40a is disposed on a more rear side than the first connection port 30c of the canister 30, while being disposed on a more front side than the second connection port 30d of the canister 30. The coupling portion 40b extends from the left end of the body 40a in the vehicle width direction. The first and second connection ports 40c and 40d are connected to the body 40a through the coupling portion 40b. The first and second connection ports 40c and 40d extend forward and downward from the coupling portion 40b. It should be noted that the coupling portion 40b may be omitted. In other words, the first and second connection ports 40c and 40d may be directly connected to the body 40a.

As shown in FIG. 5, the first connection port 40c is connected to the throttle body 23 through the first hose 51. The first connection port 40c is disposed on a lower side than the connection ports 23b of the throttle body 23. In other words, the connection ports 23b of the throttle body 23 are disposed on an upper side than the first connection port 40c. As shown in FIG. 7, the second connection port 40d is connected to the canister 30 through the second hose 52. The second connection port 40d is disposed between the body 40a and the first connection port 40c. The second connection port 40d is located on an upper side than the second connection port 30d of the canister 30. The third connection port 40e is a port to which an electric cable (not shown in the drawings) is plugged for connecting the purge valve 40 and the engine control unit to each other. The third connection port 40e extends forward and downward from the right end of the body 40a.

Next, the first hose 51 will be explained in detail with reference to FIGS. 3 and 5. The first hose 51 is an exemplary hose. The first hose 51 connects the throttle body 23 and the purge valve 40 to each other. The first hose 51 is connected at one end thereof to the connection ports 23b of the throttle body 23, while being connected at the other end thereof to the first connection port 40c of the purge valve 40. The first hose 51 includes a first portion 51a, a second portion 51b, a third portion 51c, and a fourth portion 51d.

The first portion 51a is connected at the rear end thereof to the first connection port 40c of the purge valve 40 and extends forward and downward toward the throttle body 23. The second portion 51b extends forward and upward from the front end of the first portion 51a. The front end of the second portion 51b is located outside the rear end thereof in the vehicle width direction. The front end of the second portion 51b overlaps the throttles 23a of the throttle body 23 in the vehicle side view. The second portion 51b is greater in dimension than the first portion 51a.

The third portion 51c extends forward and upward from the front end of the second portion 51b. The third portion 51c slants more gently than the second portion 51b. The front end of the third portion 51c is disposed both on a more front side and an upper side than the connection ports 23b of the throttle body 23. The fourth portion 51d is connected to the connection ports 23b that are provided for the throttles 23a on a one-to-one basis. As shown in FIG. 3, the fourth portion 51d includes a first extended portion 51e and a plurality of extended portions 51g. The first extended portion 51e extends from the front end of the third portion 51c in the vehicle width direction. The plural extended portions 51g are branched from the first extended portion 51e. The plural extended portions 51g extend downward and rearward toward the connection ports 23b of the throttle body 23.

As shown in FIG. 7, the second hose 52 connects the canister 30 and the purge valve 40 to each other. The second hose 52 is connected at one end thereof to the second connection port 30d of the canister 30, while being connected at the other end thereof to the second connection port 40d of the purge valve 40. A portion of the second hose 52 overlaps the front surface portion 301a in the vehicle plan view.

As shown in FIGS. 2 and 4, the third hose 53 connects the fuel tank 7 and the canister 30 to each other. The third hose 53 is connected at one end thereof to a cap 7a of the fuel tank 7, while being connected at the other end thereof to the first connection port 30c of the canister 30. The gasoline, volatilized inside the fuel tank 7, flows through the third hose 53 to the canister 30 and is absorbed therein. The third hose 53 extends downward from the cap 7a of the fuel tank 7.

The fourth hose 54 is an exemplary discharge hose. The fourth hose 54 discharges the air in the canister 30. As shown in FIGS. 5 and 6, the fourth hose 54 is connected at one end thereof to the third connection port 30e of the canister 30, while being opened at the other end thereof. The fourth hose 54 is connected to the canister 30 in a position located behind the engine 6. The fourth hose 54 extends downward from the third connection port 30e.

As shown in FIG. 6, the starter motor 56 is held by the holder 60. The starter motor 56 is attached to the engine 6. When described in detail, the starter motor 56 is attached to a motor mount (not shown in the drawings) provided on the crankcase 21. The starter motor 56 is disposed directly below the canister 30. The starter motor 56 is disposed on a more front side than the purge valve 40. The front end of the starter motor 56 is disposed on a more front side than the front surface portion 301a of the canister 30. The rear end of the starter motor 56 is located on a more front side than the rear surface portion 301b of the canister 30. The starter motor 56 overlaps the purge valve 40 in the vehicle plan view.

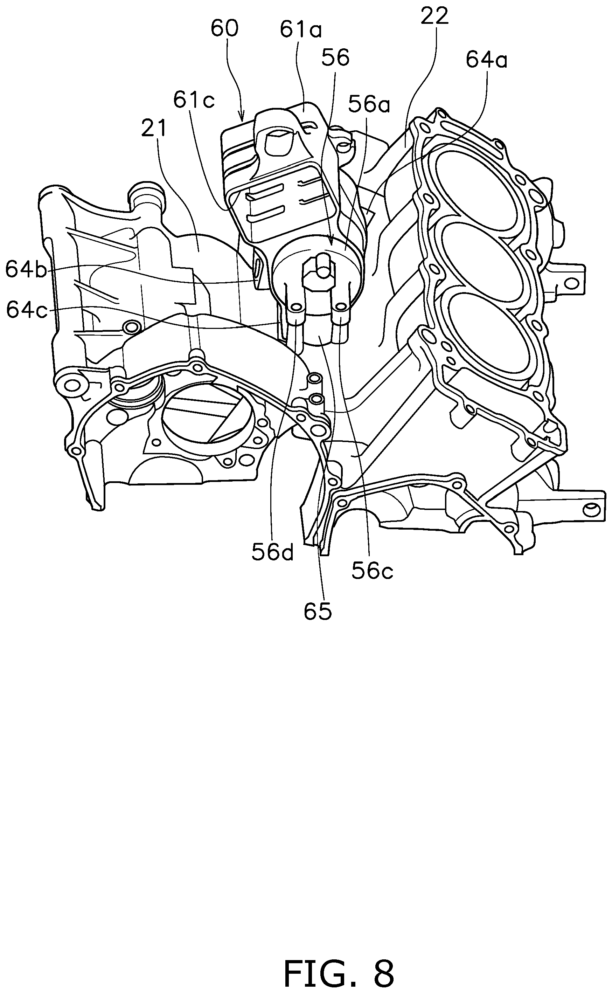

FIG. 8 is a perspective view of the crankcase 21, the starter motor 56, and the holder 60 seen from the right rear of the vehicle. It should be noted that in FIG. 8, the canister 30 and the purge valve 40 are omitted. As shown in FIGS. 6 and 8, the starter motor 56 includes a motor body 56a, a rotational shaft 56b, a first bracket portion 56c, and a second bracket portion 56d. The motor body 56a has an approximately cylindrical shape. The rotational shaft 56b extends in the vehicle width direction. The first and second bracket portions 56c and 56d protrude from the right end of the motor body 56a in the vehicle width direction. The first and second bracket portions 56c and 56d include holes, respectively, into which fixation members such as bolts are inserted. The first and second bracket portions 56c and 56d are fixed to the crankcase 21 by the fixation members inserted into the holes. The first and second bracket portions 56c and 56d are disposed at an interval in the back-and-forth direction.

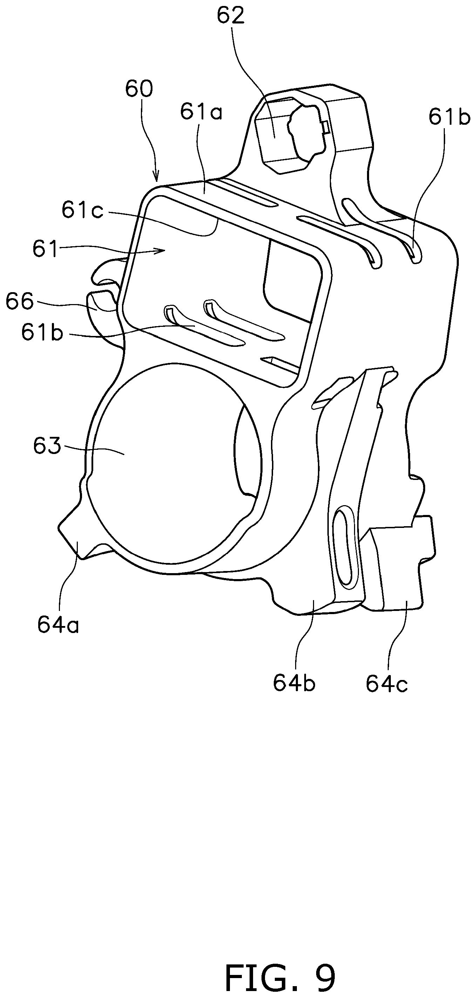

FIG. 9 is a perspective view of the holder 60. The holder 60 is made of elastic material such as rubber. The holder 60 collectively holds the canister 30, the purge valve 40, and the starter motor 56. The holder 60 includes a canister holding portion 61, a valve holding portion 62, and a motor holding portion 63. The canister holding portion 61, the valve holding portion 62, and the motor holding portion 63 are each made in shape of a hole penetrating the holder 60 in the vehicle width direction. The canister holding portion 61, the valve holding portion 62, and the motor holding portion 63 are formed independently in the holder 60.

The canister holding portion 61 is disposed between the valve holding portion 62 and the motor holding portion 63. The canister holding portion 61 is shaped to fit the contour of the body 30a of the canister 30. Therefore, the canister holding portion 61 is made in shape of an approximately rectangular hole in the vehicle side view. The canister 30 is inserted into the canister holding portion 61 along the vehicle width direction and is held by the canister holding portion 61. The canister holding portion 61 includes a fitting portion 61a, to which the upper surface portion 301e of the canister 30 is fitted, and a plurality of slits 61b, to which the plural ribs 30b of the canister 30 are locked. An inner surface 61c of the fitting portion 61a is shaped to fit the upper surface portion 301e of the canister 30 so as to be in contact therewith. The fitting portion 61a is made in shape of a plane slanting with respect to the horizontal direction in the vehicle side view. The fitting portion 61a slants such that a front portion thereof is located on an upper side than a rear portion thereof. The plural slits 61b are composed of two or more slits 61b provided in a lower portion of the canister holding portion 61 and two or more slits 61b provided in the fitting portion 61a.

The valve holding portion 62 is disposed on the upper side of the canister holding portion 61. The valve holding portion 62 is shaped to protrude upward from the fitting portion 61a of the canister holding portion 61. The valve holding portion 62 is eccentric to the second connection port 30d on the fitting portion 61a. As shown in FIG. 7, the valve holding portion 62 entirely overlaps the canister holding portion 61 in the vehicle plan view. The valve holding portion 62 overlaps the motor holding portion 63 in the vehicle plan view. The purge valve 40 is inserted into the valve holding portion 62 along the vehicle width direction and is held by the valve holding portion 62. In the present preferred embodiment, the valve holding portion 62 is shaped to fit the contour of the body 40a of the purge valve 40, whereby the body 40a of the purge valve 40 is held by the valve holding portion 62 while in contact therewith.

The motor holding portion 63 is disposed on the lower side of the canister holding portion 61. The starter motor 56 is inserted into the motor holding portion 63 along the vehicle width direction and is held by the motor holding portion 63. In the present preferred embodiment, the motor holding portion 63 is shaped to fit the contour of the motor body 56a of the starter motor 56. Therefore, the motor holding portion 63 has an approximately cylindrical shape in the vehicle side view. The motor body 56a of the starter motor 56 is held by the motor holding portion 63 while in contact therewith.

The holder 60 includes a plurality of support protrusions 64a to 64c, a protruding portion 65, and a guide portion 66. The support protrusion 64a protrudes from a front lower portion of the motor holding portion 63. The support protrusions 64b and 64c protrude from a rear lower portion of the motor holding portion 63. The support protrusions 64b and 64c are separated in the vehicle width direction. As shown in FIG. 8, the support protrusion 64a makes contact with the cylinder 22, whereas the support protrusions 64b and 64c make contact with the crankcase 21.

As shown in FIG. 7, the protruding portion 65 protrudes from a lower portion of the motor holding portion 63 in the vehicle width direction. As shown in FIG. 8, the protruding portion 65 is sandwiched between the first bracket portion 56c and the second bracket portion 56d of the starter motor 56.

The guide portion 66 guides a hose 58 connected to the fuel tank 7. The hose 58 is connected at one end thereof to the fuel tank 7, while being opened at the other end thereof. The hose 58 extends approximately downward from the fuel tank 7. The other end of the hose 58 is disposed behind the engine 6. The guide portion 66 is made in shape of a clamp and clamps the hose 58. A portion of the hose 58 guided by the guide portion 66 overlaps the fourth hose 54 in the vehicle side view.

In the straddled vehicle 100 according to the present aspect, the canister 30 and the purge valve 40 are collectively held by the holder 60 made of an elastic material. Hence, degradation in efficiency of space usage, increase in manufacturing cost, and increase in vehicle weight can be inhibited in the straddled vehicle 100 including the canister 30 and the purge valve 40. Besides, vibrations, transmitted from the engine 6 to the canister 30 and the purge valve 40, can be inhibited by the holder 60. Furthermore, the valve holding portion 62 is provided to protrude from the fitting portion 61a made in shape of a plane slanting with respect to the horizontal direction in the vehicle side view. Hence, the purge valve 40 can be held in an adjacent position to the canister 30. For example, this makes it possible to shorten the second hose 52 that connects the purge valve 40 and the canister 30. Accordingly, an efficient layout is enabled for the second hose 52, and simultaneously, increase in manufacturing cost can be inhibited.

The valve holding portion 62 is made in shape of a hole penetrating the holder 60 in the vehicle width direction. Besides, the purge valve 40 is inserted into the valve holding portion 62 along the vehicle width direction and is held by the valve holding portion 62. Because of this, the purge valve 40 can be held with a simple configuration.

The holder 60 includes the motor holding portion 63 holding the starter motor 56. Hence, degradation in efficiency of space usage, increase in manufacturing cost, and increase in vehicle weight can be further inhibited.

The holder 60 includes the guide portion 66 guiding the hose 58 connected to the fuel tank 7. Hence, the hose 58 can be guided by the holder 60.

The purge valve 40 is disposed directly above the canister 30. Hence, the canister 30 and the fuel tank 7 are disposed at close distance. This makes it possible to shorten the third hose 53 that connects the canister 30 and the fuel tank 7.

One preferred embodiment of the present invention has been explained above. However, the present invention is not limited to the preferred embodiment described above, and a variety of changes can be made without departing from the gist of the present invention.

The straddled vehicle 100 is not limited to the scooter, and alternatively, may be another type of vehicle. The vehicle body frame 2 and the engine 6 may be changed in structure.

In the preferred embodiment described above, the upper surface portion 301e has been exemplified as the flat surface portion. However, either the front surface portion 301a or the rear surface portion 301b may be set as the flat surface portion. For example, when the front surface portion 301a is set as the flat surface portion, the portion of the canister holding portion 61, to which the front surface portion 301a is fitted, corresponds to the fitting portion 61a, and the valve holding portion 62 is provided to protrude forward from the front surface portion 301a. Likewise, when the rear surface portion 301b is set as the flat surface portion, the portion of the canister holding portion 61, to which the rear surface portion 301b is fitted, corresponds to the fitting portion 61a, and the valve holding portion 62 is provided to protrude rearward from the rear surface portion 301b.

## Claims

1. A straddled vehicle (100) comprising:
a vehicle body frame (2) including a head pipe (11);
an engine (6) including a throttle body (23), the engine (6) being supported by the vehicle body frame (2);
a canister (30) including a flat surface portion (301e) slanting with respect to a horizontal direction in a vehicle side view; and
a purge valve (40) connected to the canister (30) and the throttle body (23);
a holder made (60) of an elastic material, the holder (60) collectively holding the canister (30) and the purge valve (40);and
a starter motor (56) attached to the engine (6), and **characterised in that**
the holder (60) includes a fitting portion (61a) to which the flat surface portion (301e) of the canister (30) is fitted and a valve holding portion (62) provided to protrude from the fitting portion (61a),
the holder (60) further includes a motor holding portion (63) holding the starter motor (56).

2. The straddled vehicle according to claim 1, wherein
the valve holding portion (62) is made in shape of a hole penetrating the holder (60) in a vehicle width direction, and
the purge valve (40) is inserted into the valve holding portion (62) along the vehicle width direction and is held by the valve holding portion (62).

3. The straddled vehicle according to any one of the foregoing claims, further comprising:
a fuel tank (7) disposed behind the head pipe (11), wherein
the holder (60) includes a guide portion (66) guiding a hose (58) connected to the fuel tank (7).

4. The straddled vehicle according to any one of claims 1 to 3, wherein the purge valve (40) is disposed directly above the canister (30).

## Patentansprüche

1. . Grätschsitzfahrzeug (100), mit:
einem Fahrzeugkarosserierahmen (2) mit einem Kopfrohr (11);
einem Motor (6) mit einem Drosselklappengehäuse (23 ), wobei der Motor (6) von dem Fahrzeugkarosserierahmen (2) getragen wird;
einem Ölfiltergehäuse (30) mit einem ebenen Oberflächenabschnitt (301e), der in Bezug auf eine horizontale Richtung in einer Fahrzeugseitenansicht geneigt ist; und
einem Spülventil (40), das mit dem Ölfiltergehäuse (30) und dem Drosselklappengehäuse (23) verbunden ist;
einem Halter (60) aus einem elastischen Material, wobei der Halter (60) gemeinsam das Ölfiltergehäuse (30) und das Spülventil (40) hält; und
einem Anlasser (56), der an dem Motor (6) angebracht ist, und
**dadurch gekennzeichnet, dass**
der Halter (60) einen Passabschnitt (61a), an den der ebenen Oberflächenabschnitt (301e) des Ölfiltergehäuses (30) angepasst ist, und einen Ventilhalteabschnitt (62) aufweist, der so vorgesehen ist, dass er aus dem Passabschnitt (61a) herausragt,
der Halter (60) ferner einen Motorhalteabschnitt (63) aufweist, der den Anlasser (56) hält.

2. . Grätschsitzfahrzeug gemäß Anspruch 1, wobei
der Ventilhalteabschnitt (62) in Form einer Bohrung ausgebildet ist, die durch den Halter (60) in Fahrzeugbreitenrichtung verläuft, und
das Spülventil (40) entlang der Fahrzeugbreitenrichtung in den Ventilhalteabschnitt (62) eingesetzt ist und durch den Ventilhalteabschnitt (62) gehalten wird.

3. . Grätschsitzfahrzeug gemäß einem der vorstehenden Ansprüche, das ferner aufweist:
einen hinter dem Kopfrohr (11) angeordneten Kraftstofftank (7), wobei
die Halterung (60) einen Führungsabschnitt (66) aufweist, der einen mit dem Kraftstofftank (7) verbundenen Schlauch (58) führt.

4. . Grätschsitzfahrzeug gemäß einem der Ansprüche 1 bis 3, wobei das Spülventil (40) direkt über dem Ölfiltergehäuse (30) angeordnet ist.

## Revendications

1. Véhicule à enfourcher (100) comprenant:
un châssis de véhicule (2) comprenant un tube de tête (11);
un moteur (6) comprenant un corps de papillon (23), le moteur (6) étant supporté par le châssis (2) de la carrosserie du véhicule;
un réservoir (30) comprenant une partie de surface plane (301e) inclinée par rapport à une direction horizontale dans une vue latérale du véhicule; et
une soupape de purge (40) reliée au réservoir (30) et au corps de papillon (23);
un support (60) fabriqué à partir d'un matériau élastique, le support (60) maintenant collectivement le réservoir (30) et la soupape de purge (40); et
un démarreur (56) fixé au moteur (6), et **caractérisé en ce que**
le support (60) comprend une partie d'ajustement (61a) sur laquelle s'ajuste la partie de surface plane (301e) du réservoir (30) et une partie de maintien de soupape (62) prévue pour faire saillie à partir de la partie d'ajustement (61a),
le support (60) comprend en outre une partie de maintien de moteur (63) maintenant le démarreur (56).

2. Véhicule à enfourcher selon la revendication 1, dans lequel
la partie de maintien de soupape (62) est sous forme de trou traversant le support (60) dans le sens de la largeur du véhicule, et
la soupape de purge (40) est insérée dans la partie de maintien de soupape (62) dans le sens de la largeur du véhicule et est maintenue par la partie de maintien de soupape (62).

3. Véhicule à enfourcher selon l'une quelconque des revendications précédentes, comprenant en outre:
un réservoir de carburant (7) disposé derrière le tuyau de tête (11), dans lequel le support (60) comprend une partie de guidage (66) guidant un tuyau (58) relié au réservoir de carburant (7).

4. Véhicule à enfourcher selon l'une quelconque des revendications 1 à 3, dans lequel la soupape de purge (40) est disposée directement au-dessus du réservoir (30).
